# EUROPEAN PATENT APPLICATION

(11) **EP 4 700 053 A1**
(43) Date of publication of application: **25.02.2026**
(21) Application number: 24195093.0
(22) Date of filing: 19.08.2024
(51) Int. Cl.: C08G 18/12, C08G 18/32, C08G 18/48, C08G 18/62, C08G 18/66, C08G 18/67, C08G 18/76, C08G 18/79, C09D 175/14, C09D 175/16, A41D 19/00, C09D 175/08

(54) **SOLVENT-FREE POLYURETHANE SLURRY AND PREPARATION METHOD THEREOF, AND ENVIRONMENTAL-FRIENDLY RESIN-COATED PROTECTIVE GLOVES AND PREPARATION METHOD THEREOF**

(71) Applicant: WonderGrip(CHINA)CO.,Ltd., Dongtai City, Jiangsu 224200 (CN)
(72) Inventor: DAI, Guoda, Dongtai City, Jiangsu, 224200 (CN); DAI, Menglu, Dongtai City, Jiangsu, 224200 (CN); WATANABE, Genkai, Dongtai City, Jiangsu, 224200 (CN); WEN, Wei, Dongtai City, Jiangsu, 224200 (CN)
(74) Representative: Porta & Consulenti Associati S.p.A.

(57) **Abstract**

Provided are a solvent-free polyurethane (PU) slurry and a preparation method thereof, and environmental-friendly resin-coated protective gloves and a preparation method thereof. The solvent-free PU slurry does not have an organic solvent, and the reaction speed and efficiency of a component A and a component B are controlled by adjusting the type and dosage of raw materials. When preparing the protective gloves, the slurry can be cured instantly under ultraviolet (UV) irradiation to greatly improve a number average molecular weight and a cross-linking density of polymers in the protective gloves produced from the solvent-free PU slurry, thereby improving wear resistance, oil resistance, and solvent resistance of the protective gloves produced from the solvent-free PU slurry.

## Description

### TECHNICAL FIELD

The present disclosure relates to the technical field of polyurethane (PU) materials, and in particular to a solvent-free PU slurry and a preparation method thereof, and environmental-friendly resin-coated protective gloves and a preparation method thereof.

### BACKGROUND

Currently, polyurethane (PU) gloves on the market are divided into two categories according to the type of the raw material PU. One is protective gloves produced from solvent-based PU, and shows strong wear resistance, oil resistance, and solvent resistance. However, since the preparation of the solvent-based PU and subsequent viscosity adjustment require a toxic *N*,*N*-dimethylformamide (DMF) solvent, and the DMF solvent remains in the gloves even after multiple immersing and washing. During the production and use of gloves, the residual DMF solvent causes harm to the human body and the surrounding environment. The other is protective gloves produced from a water-based PU emulsion, in which the water-based PU uses water as a solvent, which greatly reduces the dosage of organic solvents and reduces the harm to the human body and the environment. However, the gloves exhibit worse wear resistance, oil resistance, and solvent resistance than those produced from the solvent-based PU, and has a high cost.

### SUMMARY

An object of the present disclosure is to provide a solvent-free PU slurry. The slurry does not use organic solvents, and protective gloves produced therefrom have no harmful residues, exhibits superior wear resistance, oil resistance, and solvent resistance, and have a simple preparation process and a low cost.

To achieve the above object, the present disclosure provides the following technical solutions:

The present disclosure provides a solvent-free PU slurry, including a component A and a component B, with a mass ratio of the component A to the component B ranging from 100: 67 to 100: 93; wherein
the component A includes the following raw materials in parts by mass: 67 parts to 93 parts of a polyoxypropylene tetraol, 7 parts to 24 parts of a hydroxy acrylate, 0.3 parts to 5 parts of an alcohol chain extender, 0.7 parts to 7 parts of a photoinitiator, 0.03 parts to 0.7 parts of a delayed-action catalyst, and 0.03 parts to 0.8 parts of a foam stabilizer; and
the component B includes the following raw materials in parts by mass: 21 parts to 43 parts of a polyoxypropylene diol, 12 parts to 25 parts of a double-bond-containing terminal hydroxyl polymer, 45 parts to 61 parts of a polyisocyanate, and 0.008 parts to 0.05 parts of a polymerization inhibitor.

In some embodiments, the polyoxypropylene tetraol has a number average molecular weight of 800 to 3,000, and
the number average molecular weight of the polyoxypropylene tetraol is detected by gel permeation chromatography (GPC) combined with differential refractive index detector (RID).

In some embodiments, the hydroxy acrylate is at least one selected from the group consisting of hydroxyethyl acrylate, hydroxypropyl acrylate, hydroxyethyl methacrylate (HEMA), hydroxypropyl methacrylate (HPMA), trimethylolpropane diacrylate (TMPDA), and pentaerythritol triacrylate (PETA).

In some embodiments, the polyoxypropylene diol has a number average molecular weight of 1,000 to 3,000, and
the number average molecular weight of the polyoxypropylene diol is detected by GPC combined with RID.

The present disclosure further provides a method for preparing the solvent-free PU slurry mentioned above, including the following steps:
mixing the polyoxypropylene tetraol, the hydroxy acrylate, and the alcohol chain extender to obtain a first mixture, and subjecting the first mixture to first heating stirring and cooling in sequence, and adding the foam stabilizer to a resulting cooled product to obtain a second mixture, and subj ecting the second mixture to second heating stirring to obtain a mixture system;
mixing the mixture system with the photoinitiator and the delayed-action catalyst to obtain the component A;
mixing the polyisocyanate and the polymerization inhibitor to obtain a third mixture, and subjecting the third mixture to third heating stirring, and adding the polyoxypropylene diol and the double-bond-containing terminal hydroxyl polymer and subjecting a resulting product to heating reaction and vacuum defoamation in sequence to obtain the component B; and
mixing the component A and the component B to obtain the solvent-free PU slurry.

The present disclosure further provides environmental-friendly resin-coated protective gloves produced from the solvent-free PU slurry mentioned above or the solvent-free PU slurry prepared by the method mentioned above.

The present disclosure further provides a method for preparing the environmental-friendly resin-coated protective gloves mentioned above, including the following steps:
preheating a hand model covered with a glove core,
coating an anti-penetration agent on a surface of the glove core,
subjecting a resulting coated glove core to impregnating with the solvent-free PU slurry, ultraviolet (UV)-curing, and drying in sequence, and then subjecting a resulting dried product to a post-treatment to obtain the environmental-friendly resin-coated protective gloves.

The present disclosure provides a solvent-free PU slurry. In the present disclosure, the slurry does not use an organic solvent. The protective gloves produced therefrom have no harmful residues, and a reaction speed and a reaction efficiency of the component A (polyol component) and the component B (prepolymer component) are controlled by adjusting the type and dosage of raw materials. When the protective gloves are subsequently prepared, the slurry is instantly cured under UV irradiation, which greatly improves a number average molecular weight and a cross-linking density of polymers in the prepared protective gloves, thus improving wear resistance, oil resistance, and solvent resistance of the protective gloves. An alcohol chain extender used has a wide source and a low price, thereby lowering the costs.

### BRIEF DESCRIPTION OF THE DRAWINGS

Figure shows a schematic diagram of the method for preparing environmental-friendly resin-coated protective gloves provided by the present disclosure.

### DETAILED DESCRIPTION OF THE EMBODIMENTS

The present disclosure provides a solvent-free PU slurry, including (or consisting of) a component A and a component B, with a mass ratio of the component A to the component B ranging from 100: 67 to 100: 93; wherein
the component A includes the following raw materials in parts by mass: 67 parts to 93 parts of a polyoxypropylene tetraol, 7 parts to 24 parts of a hydroxy acrylate, 0.3 parts to 5 parts of an alcohol chain extender, 0.7 parts to 7 parts of a photoinitiator, 0.03 parts to 0.7 parts of a delayed-action catalyst, and 0.03 parts to 0.8 parts of a foam stabilizer; and
the component B includes the following raw materials in parts by mass: 21 parts to 43 parts of a polyoxypropylene diol, 12 parts to 25 parts of a double-bond-containing terminal hydroxyl polymer, 45 parts to 61 parts of a polyisocyanate, and 0.008 parts to 0.05 parts of a polymerization inhibitor.

In some embodiments of the present disclosure, a mass ratio of the component A to the component B is 100: 70 to 100: 90. In some embodiments of the present disclosure, the component A includes the following raw materials in parts by mass: 70 parts to 90 parts of the polyoxypropylene tetraol, 10 parts to 20 parts of the hydroxy acrylate, 0.5 parts to 3 parts of the alcohol chain extender, 1 part to 5 parts of the photoinitiator, 0.05 parts to 0.5 parts of the delayed-action catalyst, and 0.05 parts to 0.5 parts of the foam stabilizer. In some embodiments of the present disclosure, the component B includes the following raw materials in parts by mass: 25 parts to 40 parts of the polyoxypropylene diol, 15 parts to 20 parts of the double-bond-containing terminal hydroxyl polymer, 40 parts to 65 parts of the polyisocyanate, and 0.01 parts to 0.03 parts of the polymerization inhibitor.

In some embodiments of the present disclosure, the polyoxypropylene tetraol is in a liquid state, does not contain oxyethylene repeating units, and has a number average molecular weight of 1,000 to 3,000. In some embodiments of the present disclosure, the number average molecular weight of the polyoxypropylene tetraol is detected by gel permeation chromatography (GPC) combined with differential refractive index detector (RID), and the detection conditions are as follows: column pressure is 6.86 MPa, column temperature is 40 °C (or adjusted according to specific instruments and samples), flow rate is 1.0 mL/min, mobile phase is tetrahydrofuran (THF), and injection volume is 25 µL. In some embodiments of the present disclosure, the hydroxy acrylate is at least one selected from the group consisting of hydroxyethyl acrylate, hydroxypropyl acrylate, HEMA, HPMA, TMPDA, and PETA. In some embodiments of the present disclosure, the alcohol chain extender is at least one selected from the group consisting of ethylene glycol, 1,3-propylene glycol, 1,2-propylene glycol, methyldiethanolamine, and dihydroxyethylaniline. In some embodiments of the present disclosure, the photoinitiator is at least one selected from the group consisting of 2-hydroxy-methylphenylpropane-1-one, 1-hydroxycyclohexylphenyl ketone, and 2-methyl-1-(4-methylthiophenyl)-2-morpholinyl-1-propanone. In some embodiments of the present disclosure, the delayed-action catalyst is DY-215 (consisting essentially of organometallic compounds, amine compounds or other chemical substances with catalytic activity) or Niax A-510. In some embodiments of the present disclosure, the foam stabilizer is a polysiloxane-oxyalkylene block copolymer or a polysiloxane-oxyalkylene graft copolymer.

In some embodiments of the present disclosure, the polyoxypropylene diol does not contain oxyethylene repeating units and has a number average molecular weight of 1,000 to 3,000. In some embodiments of the present disclosure, the number average molecular weight of the polyoxypropylene diol is detected by GPC combined with RID, and the detection conditions are as follows: column pressure is 6.86 MPa, column temperature is 40 °C (or adjusted according to specific instruments and samples), flow rate is 1.0 mL/min, mobile phase is THF, and injection volume is 25 µL. In some embodiments of the present disclosure, the double-bond-containing terminal hydroxyl polymer is at least one selected from the group consisting of terminal hydroxyl polybutadiene, terminal hydroxyl hydrogenated polybutadiene, terminal hydroxyl epoxidized polybutadiene resin, and terminal hydroxyl polyisoprene. In some embodiments of the present disclosure, the polymerization inhibitor is phosphoric acid or benzoyl chloride. In some embodiments of the present disclosure, the polyisocyanate is composed of diphenylmethylene diisocyanate, carbodiimide-modified diphenylmethane diisocyanate, and MDI-50 (a mixture of 2,4- diphenylmethane diisocyanate and 4,4'-diphenylmethane diisocyanate) in a mass ratio of (70-90): (5-20): (1-10).

The present disclosure further provides a method for preparing the solvent-free PU slurry mentioned above, including the following steps:
mixing the polyoxypropylene tetraol, the hydroxy acrylate, and the alcohol chain extender to obtain a first mixture, and subjecting the first mixture to first heating stirring and cooling in sequence, and adding the foam stabilizer to a resulting cooled product to obtain a second mixture, and subj ecting the second mixture to second heating stirring to obtain a mixture system;
mixing the mixture system with the photoinitiator and the delayed-action catalyst to obtain the component A;
mixing the polyisocyanate and the polymerization inhibitor to obtain a third mixture and subjecting the third mixture to third heating stirring, and adding the polyoxypropylene diol and the double-bond-containing terminal hydroxyl polymer and subjecting a resulting product to heating reaction and vacuum defoamation in sequence to obtain the component B; and
mixing the component A and the component B to obtain the solvent-free PU slurry.

In some embodiments of the present disclosure, the first heating stirring is conducted at a temperature of 50 °C to 55 °C for 1 h. In some embodiments of the present disclosure, the cooling is conducted to reach 30 °C to 40 °C. In some embodiments of the present disclosure, the second heating stirring is conducted at a temperature of 30 °C to 40 °C for 2 h to 3 h. In some embodiments of the present disclosure, the third heating stirring is conducted at a temperature of 50 °C to 60 °C. In some embodiments of the present disclosure, the heating reaction is conducted at a temperature of 65 °C to 90 °C for 2 h to 4 h; when the heating reaction system has an NCO content of 10 wt% to 20 wt%, the vacuum defoamation is conducted at -0.08 MPa to -0.1 MPa for 2 h to 3 h.

The present disclosure further provides environmental-friendly resin-coated protective gloves produced from the solvent-free PU slurry mentioned above or the solvent-free PU slurry prepared by the method mentioned above.

The present disclosure further provides a method for preparing the environmental-friendly resin-coated protective gloves mentioned above, including the following steps:
preheating a hand model covered with a glove core,
coating an anti-penetration agent on a surface of the glove core,
subjecting a resulting coated glove core to impregnating with the solvent-free PU slurry, ultraviolet (UV)-curing, and drying in sequence, and then subjecting a resulting dried product to a post-treatment to obtain the environmental-friendly resin-coated protective gloves.

In some embodiments of the present disclosure, the preheating is conducted at a temperature of 30 °C to 130 °C. In some embodiments of the present disclosure, the anti-penetration agent is at least one selected from the group consisting of water-based PU, solvent-free PU, natural latex, nitrile, and liquid silicone. In some embodiments of the present disclosure, the coating is performed by dip-coating, impregnation, or spraying. In some embodiments of the present disclosure, the impregnating with the solvent-free PU slurry, UV-curing, and drying in sequence are conducted 1 to 4 times. In some embodiments of the present disclosure, the UV-curing is conducted for 1 s to 10 s. In some embodiments of the present disclosure, the drying is conducted at a temperature of 100 °C to 140 °C for 10 min to 90 min. In some embodiments of the present disclosure, the post-treatment includes immersion, spraying, drying, and demolding in sequence.

The technical solutions of the present disclosure will be clearly and completely described below with reference to the examples of the present disclosure. The described embodiments are merely some rather than all of the embodiments of the present disclosure. All other embodiments obtained by those skilled in the art based on the embodiments of the present disclosure without inventive labour shall fall within the scope of the present disclosure.

Figure shows a schematic diagram of the method for preparing environmental-friendly resin-coated protective gloves provided by the present disclosure.

### Example 1

A solvent-free PU slurry consisted of a component A and a component B in a mass ratio of 100: 80.

The component A consisted of the following raw materials in parts by mass: 70 parts of a liquid polyoxypropylene tetraol with a number average molecular weight of 3,000 and no oxyethylene repeating unit, 10 parts of hydroxyethyl acrylate, 0.5 parts of ethylene glycol as an alcohol chain extender, 5 parts of 2-hydroxy-methylphenylpropane-1-one as a photoinitiator, 0.2 parts of DY-215 as a delayed-action catalyst, and 0.5 parts of a polysiloxane-oxyalkylene block copolymer as a foam stabilizer.

The component B consisted of the following raw materials in parts by weight: 25 parts of a polyoxypropylene diol without oxyethylene repeating unit and with a number average molecular weight of 2,000, 15 parts of terminal hydroxyl hydrogenated polybutadiene, 60 parts of a polyisocyanate, and 0.02 parts of phosphoric acid as a polymerization inhibitor.

The polyisocyanate consisted of diphenylmethylene diisocyanate, carbodiimide-modified diphenylmethane diisocyanate, and MDI-50 in a mass ratio of 80: 15: 5.

A method for preparing the solvent-free PU slurry was performed as follows:
The polyoxypropylene tetraol, the hydroxy acrylate, and the alcohol chain extender were mixed to obtain a first mixture, and the first mixture was subjected to first heating stirring at 50 °C for 1 h and cooling to 40 °C in sequence. The foam stabilizer was added to a resulting cooled product to obtain a second mixture, and the second mixture was subjected to second heating stirring at 40 °C for 2 h to obtain a mixture system.

The mixture system, the photoinitiator and the delayed-action catalyst were mixed to obtain the component A.

The polyisocyanate and the polymerization inhibitor were mixed to obtain a third mixture, and the third mixture was subjected to third heating stirring at 55 °C for 0.5 h. The polyoxypropylene diol and terminal hydroxyl hydrogenated polybutadiene were then added thereto and a resulting product was subjected to heating reaction at 80 °C for 2 h and then vacuum defoamation at -0.08 MPa for 2 h when an NCO content in the heating reaction system was 17 wt% to obtain the component B.

The component A and the component B were mixed to obtain the solvent-free PU slurry.

### Use Example 1

A method for preparing environmental-friendly resin-coated protective gloves was performed as follows:
A hand model covered with a nylon glove core was preheated to 70 °C.

Water-based PU as an anti-penetration agent was coated on a surface of the glove core.

A resulting coated glove core was subjected to impregnating with the solvent-free PU slurry in Example 1, UV-curing for 2 s, and drying in sequence, and then a resulting dried product was subjected to immersion, spraying, drying and demolding in sequence to obtain the environmental-friendly resin-coated protective gloves.

The above descriptions are merely preferred embodiments of the present disclosure. It should be noted that a person of ordinary skill in the art may further make several improvements and modifications without departing from the principle of the present disclosure, but such improvements and modifications should be deemed as falling within the scope of the present disclosure.

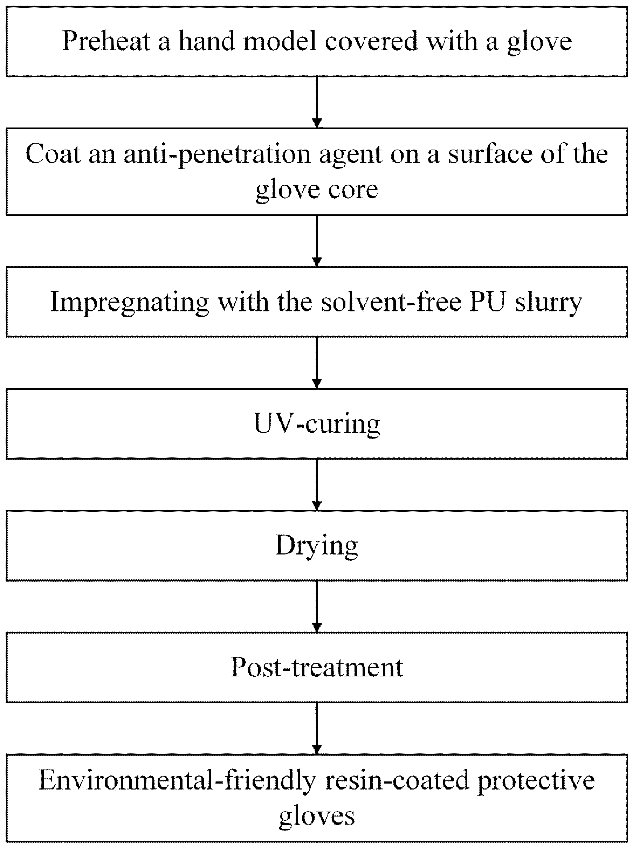

## Claims

1. A solvent-free polyurethane (PU) slurry, comprising a component A and a component B, with a mass ratio of the component A to the component B ranging from 100: 67 to 100: 93; wherein
the component A comprises the following raw materials in parts by mass: 67 parts to 93 parts of a polyoxypropylene tetraol, 7 parts to 24 parts of a hydroxy acrylate, 0.3 parts to 5 parts of an alcohol chain extender, 0.7 parts to 7 parts of a photoinitiator, 0.03 parts to 0.7 parts of a delayed-action catalyst, and 0.03 parts to 0.8 parts of a foam stabilizer; and
the component B comprises the following raw materials in parts by mass: 21 parts to 43 parts of a polyoxypropylene diol, 12 parts to 25 parts of a double-bond-containing terminal hydroxyl polymer, 45 parts to 61 parts of a polyisocyanate, and 0.008 parts to 0.05 parts of a polymerization inhibitor.

2. The solvent-free PU slurry according to claim 1, wherein the polyoxypropylene tetraol has a number average molecular weight of 800 to 3,000, and
the number average molecular weight of the polyoxypropylene tetraol is detected by gel permeation chromatography (GPC) combined with differential refractive index detector (RID).

3. The solvent-free PU slurry according to claim 1, wherein the hydroxy acrylate is at least one selected from the group consisting of hydroxyethyl acrylate, hydroxypropyl acrylate, hydroxyethyl methacrylate (HEMA), hydroxypropyl methacrylate (HPMA), trimethylolpropane diacrylate (TMPDA), and pentaerythritol triacrylate (PETA).

4. The solvent-free PU slurry according to claim 1, wherein the polyoxypropylene diol has a number average molecular weight of 1,000 to 3,000, and
the number average molecular weight of the polyoxypropylene diol is detected by GPC combined with RID.

5. A method for preparing the solvent-free PU slurry according to any one of claims 1 to 4, comprising the following steps:
mixing the polyoxypropylene tetraol, the hydroxy acrylate, and the alcohol chain extender to obtain a first mixture, and subjecting the first mixture to first heating stirring and cooling in sequence, and adding the foam stabilizer to a resulting cooled product to obtain a second mixture, and subj ecting the second mixture to second heating stirring to obtain a mixture system;
mixing the mixture system with the photoinitiator and the delayed-action catalyst to obtain the component A;
mixing the polyisocyanate and the polymerization inhibitor to obtain a third mixture, and subjecting the third mixture to third heating stirring, and adding the polyoxypropylene diol and the double-bond-containing terminal hydroxyl polymer and subjecting a resulting product to heating reaction and vacuum defoamation in sequence to obtain the component B; and
mixing the component A and the component B to obtain the solvent-free PU slurry.

6. Environmental-friendly resin-coated protective gloves produced from the solvent-free PU slurry according to any one of claims 1 to 4 or the solvent-free PU slurry prepared by the method according to claim 5.

7. A method for preparing the environmental-friendly resin-coated protective gloves according to claim 6, comprising the following steps:
preheating a hand model covered with a glove core,
coating an anti-penetration agent on a surface of the glove core,
subjecting a resulting coated glove core to impregnating with the solvent-free PU slurry, ultraviolet (UV)-curing, and drying in sequence, and then subjecting a resulting dried product to a post-treatment to obtain the environmental-friendly resin-coated protective gloves.
